# EUROPEAN PATENT SPECIFICATION

(11) **EP 0 912 341 B1**
(45) Date of publication and mention of the grant of the patent: **02.04.2003**
(21) Application number: 97928420.5
(22) Date of filing: 10.06.1997
(51) Int. Cl.: B32B 27/08, D06N 3/00, A43B 1/00

(54) **METHOD FOR PRODUCING A COMPOSITE MATERIAL AND MATERIAL OBTAINED BY MEANS OF SAID METHOD**
VERFAHREN ZUR HERSTELLUNG EINES VERBUNDWERKSTOFFS UND NACH DIESEM VERFAHREN HERGESTELLTES MATERIAL
PROCEDE DE PRODUCTION DE MATERIAU COMPOSITE ET MATERIAU AINSI OBTENU

(30) Priority: 19.07.1996 IT VR960067
(43) Date of publication of application: 06.05.1999
(73) Proprietor: Valente, Gabriele, 37128 Verona (IT)
(72) Inventor: VALENTE, Gabriele, I-37128 Verona (IT); LAMACCHI, Alberto, I-37066 Sommacampagna (IT)
(74) Representative: Petraz, Gilberto Luigi
(86) International application number: IT9700130
(87) International publication number: WO98003333

(56) References cited:
- EP-A- 0 163 045
- EP-A- 0 374 930
- WO-A-96/27497
- DE-A- 1 654 451
- DE-A- 2 226 645
- DE-A- 3 220 768
- DE-U- 8 431 869
- FR-A- 2 227 125
- FR-A- 2 379 387
- FR-A- 2 388 659
- FR-A- 2 700 497
- GB-A- 1 466 030
- GB-A- 1 481 876
- GB-A- 1 514 224
- GB-A- 1 536 421
- GB-A- 1 549 421
- US-A- 3 799 827
- US-A- 3 804 700
- US-A- 3 849 174
- US-A- 3 892 078
- DR. H.D. JUNGE: "Index of Polymer Trade Names 2nd, greatly enlarged edition" 1992 , VCH VERLAGSGESELLSCHAFT MBH , WEINHEIM XP002040912 see page 550 - page 551

## Description

### TECHNICAL FIELD

The present invention relates to a composite material which is particularly suitable for being used in footwear manufacturing, specifically for cork soles, vamps, toes production, as well as for other applications such as spectacle-cases or the like, panellings, suitcases or leather-goods, or chairs or sofas components.

The invention is mainly applied in the fields of footwear industry or in the manufacturing of natural leather or hides, as well as in the manufacturing of furnishing elements.

### BACKGROUND ART

Footwear cork soles are usually obtained from sheet or roll supporting materials, which are generally constituted by cellulosic material or regenerated leather.

Said material represents the cork sole support, and a mixture of resins together with a suitable dyestuff is sprayed or spreaded on one side of said material in a suitable industrial plant.

Thereafter, if necessary, the treated surface of the supporting sheets undergoes an embossing operation; finally, said surface is then treated with a paint layer, usually a nitro paint.

Said manufacturing method, as well as the material obtained therewith, involve some disadvantages and drawbacks, among which a low surface resistance of the treated layer, and relatively high production costs can be principally mentioned.

Document GB-A-1,514,224 deals with multilayer composites which simulate leather and are used in all areas where real leather is generally used, such as upholstery, apparel, handbags, luggage and footwear.

Said multilayer composites are constituted by three essential components: a) textile fabrics which act as supporting substrates; b) crushed foam; c) a surface finish film.

Document DE-A-3,220,768 deals with a process for coupling a TNT substrate to a PVC or PU or PE layer, said TNT substrate being drenched with a polyester resin.

Document DE-A-1,654,451 deals with a process for the production of artificial or simulated leather obtained by coupling a foamed polyurethane to a synthetic layer, e.g. PVC, PE, PP, PA, polyester.

Document GB-A-1,536,421 deals with flexible laminates comprising a first outer layer made of a thermoplastic material: a first backing layer for the first outer layer which is constituted by paper or thin cardboard or woven and non-woven cloth; a second outer layer made of a polymeric material and the backing layer of said second outer layer which is, for example, cardboard, or woven or non-woven textile material.

Document FR-A-2,388,659 deals with the application of a coating made of synthetic resin to a PE foam.

Document US-A-3,849,174 deals with a process for the calendering of laminated plastic materials. The examples accompanying the description of the US patent show the calendering operation of heavy paper stock with polyethylene; a fabric with polyvinylcloride; a metal plastic composite (one metal foil layer and two plastic plies or two metal foil layers and one plastic layer) with polyethylene; glass with polypropylene and others. In the above document the application of polyethylene to (i) a mixture of leather regenerated materials or (ii) natural leather is not reported.

Document GB-A-1,466,030 deals with a method for the production of a coated, patterned paper support for incorporation in a photographic paper, said method comprising also extrusion-coating a layer of a polyolefin on at least one surface of the paper support. The polyolefin of example 1 is polyethylene.

Document DE-A-2,226,645 deals with foamed materials which are comprising a final polyolefinic surface layer.

Document WO 96/27497 deals with a process for obtaining sport balls or material for shoes components. Said document does not report polyethylene directly coupled to a supporting layer.

Document FR-A-2,227,125 deals with a process for the production of a layer made of a material which is coupled to a pierced layer if a material such as paper so that the porous synthetic layer contacts a turning cylinder, the irregular surface of which causes the formation of holes and crosses on the porous synthetic layer.

Document EP-A-0 374 930 deals with a particular waterproof recording material which is obtained by using a film of a resin composition comprising a thermoplastic synthetic resin and an organic or inorganic filler in granular or fibrous form or the lake. The resin composition is generally extrusion-laminated on a substrate.

### DESCRIPTION OF THE INVENTION

The present invention aims to give a simple and economic solution to the above-mentioned problems and, thus, to provide for a composite material provided with a higher surface resistance with respect to an uncoated mixture of leather regenerated materials or natural leather or to the multilayer composite known in the art, thus being particularly suitable for a plurality of applications, such as footwear cork soles or toes, and also parts of suitcases, brief-cases, spectacle-cases, chairs components or structures, as well as for recycling and regenerating stocks of leather materials, said composite material being non-toxic and thus usable for contacting the skin also for a long period of time.

This is obtained by means of the features disclosed in claim 1.

The dependent claims outline particularly advantageous forms of embodiment of the composite material according to the invention.

Furthermore, claim 4 is directed to the use of said composite material.

According to the present invention, the composite material is constituted by a suitable supporting material, available in sheets or rolls, to which a covering layer of polyethylene or any of the ethylene copolymers comprised in family commercialized as Surlyn® is directly coupled by a sprayed or spread adhesive or by hot-working, said covering layer being advantageously constituted by a thin film.

Said supporting material is constituted by a material selected from the group comprising:
- a mixture of leather regenerated materials (for instance Salpa®);
- natural leather even from stock;

The coupling of the supporting material with the covering layer can be obtained by means of a sprayed or spread adhesive or by means of a hot-working method.

Furthermore, the composite material, which is obtained by coupling the polyethylene or any of the ethylene copolymers comprised in family commercialized as Surlyn® covering layer with the supporting material, is embossed during the coupling operation.

The embossed composite material according to the present invention is non-toxic and presents extraordinary mechanical properties, for instance a very high surface resistance to abrasion or scraping.

Besides, a dyestuff layer (physical or sublimatic) can be interposed between the supporting material and the transparent covering layer of polyethylene or any of the ethylene copolymers comprised in family commercialized as Surlyn®.

Following to the coupling operation, the resultant composite material may immediately be cut so as to obtain the desired shapes, for instance soles or other footwear elements (heels or toes), or wall-paper sheets, suitcase elements or furniture articles.

In this context, it is useful to remark that the composite material according to the invention includes a polyethylene surface layer, which makes it non-toxic and it may freely be used in any applications which come into contact with the human skin, which operation is not possible, for instance, with known composite materials having surface layers made of polyvinyl chloride (PVC).

As mentioned above, the composite material according to the present invention has a very high surface resistance and can be used in many applications, above all in the footwear field.

In fact, tests demonstrated that' this material is particularly suitable for manufacturing soles, which show higher mechanical resistance than those which are typical of the known soles having a paint surface layer; other interesting applications are those concerning the manufacturing of heels or toes or vamps.

In this context it is appropriate to note that the application of the polyethylene surface layer gives stability to the supporting material surface, thereby preventing the formation of ashlars and concavities.

According to a further form of embodiment of the invention, the supporting material can be sprayed with a leather-like scent prior to embossing. In this case the resulting material cannot be distinguished from real leather any more.

Concerning the manufacturing of suitcases, brief-cases, spectacle-cases, as well as of other natural leather goods, other applications have demonstrated the absolute reliability of the material according to the invention.

Furthermore, the material according to the invention may advantageously be applied to the production of chairs or sofas elements or structures.

According to a particular form of embodiment of the material according to the invention, the material itself is provided with a series of perforations or microperforations, which are usually carried out on the sheet or roll before the final cutting according to a predetermined shape or simultaneously to the embossing operation.

## Claims

1. A composite material, comprising a supporting material in the form of sheet or roll constituted by (i) a mixture of leather regenerated materials or (ii) natural leather; **characterised in that** said supporting material is directly coupled by a sprayed or spread adhesive or by : hot-working, with an embossed covering surface layer consisting of a film in polyethylene or any of the ethylene copolymers comprised in family commercialized as Surlyn®.

2. A composite material according to claim 1, **characterized in that** said supporting material is spread with a leather-like scent prior the embossing operation.

3. A composite material according to claim 1 or 2, **characterized in that** it is provided with a series of perforations or microperforations.

4. Use of a composite material as defined in claim 1 for producing footwear cork soles, heels, vamps, toes; suitcase elements spectacle-cases, brief-cases; chairs or sofas elements or structures; furniture or furnishing elements.

## Patentansprüche

1. Verbundwerkstoff, umfassend einen Stützwerkstoff in der Blatt- oder Rollenform, ausgebildet aus (i) einer Mischung aus regenerierten Lederwerkstoffen oder (ii) natürlichem Leder; **dadurch gekennzeichnet, dass** das Stützmaterial mittels eines gesprühten oder ausgebreiteten Klebstoffes oder mittels Warmbearbeitung direkt verbunden wird mit einer geprägten bedeckenden Oberflächenschicht, bestehend aus einer Folie aus Polyethylen oder einem der Ethylencopolymere, die umfasst sind von der als Surlyn®, gewerblich vertriebenen Familie.

2. Ein Verbundwerkstoff gemäß Anspruch 1, **dadurch gekennzeichnet, dass** der Stützwerkstoff vor dem Prägearbeitsgang mit einem lederähnlichen Duft bedeckt wird.

3. Ein Verbundwerkstoff gemäß Anspruch 1 oder 2, **dadurch gekennzeichnet, dass** er versehen ist mit einer Reihe Perforierungen oder Mikroperforierungen.

4. Verwendung eines Verbundwerkstoffes gemäß Anspruch 1 zur Herstellung von Korksohlen für Schuhwerk, Absätzen, Oberleder, Schuhkappen; Kofferteilen, Brillenetuis, Aktenkoffern; Stühlen oder Sofaelementen oder Konstruktionen; Möbeln oder Einrichtungselementen.

## Revendications

1. Matériau composite, comprenant un matériau de support sous la forme d'une feuille ou d'un rouleau constitué par (i) un mélange de matériaux régénérés en cuir ou (ii) du cuir naturel; **caractérisé en ce que** ledit matériau de support est directement couplé par un adhésif pulvérisé ou étalé ou par un façonnage à chaud, à une couche de recouvrement de surface estampée consistant en un film en polyéthylène ou en un des copolymères d'éthylène compris dans une famille commercialisée sous le nom Surlyn®.

2. Matériau composite selon la revendication 1, **caractérisé en ce que** ledit matériau de support est pulvérisé avec un parfum similaire au cuir avant l'opération d'estampage.

3. Matériau composite selon l'une des revendications 1 et 2, **caractérisé en ce qu'**il est muni d'une série de perforations ou de microperforations.

4. Utilisation d'un matériau composite tel que défini dans la revendication 1 pour la production de semelles en liège, de talons, d'empeignes, de pointes de chaussures ; d'éléments de valise, d'étuis à lunettes, de portes-documents ; d'élements ou de structures de chaises ou de canapés; d'éléments de meubles ou d'ameublement.
